# EUROPEAN PATENT APPLICATION

(11) **EP 4 850 776 A1**
(43) Date of publication of application: **09.12.2026**
(21) Application number: 25305798.8
(22) Date of filing: 03.06.2025
(51) Int. Cl.: B01D 1/14, B01D 3/00, B01D 3/38

(54) **SYSTEMS AND METHODS FOR ADDITIONAL HEAT RECOVERY IN STYRENE PRODUCTION PROCESSES**

(71) Applicant: Technip Energies France, 92741 Nanterre Cedex (FR)
(72) Inventor: HUBBELL, Douglas Stuart, 92741 Nanterre Cedex (FR)
(74) Representative: Edson, Russell Gregory

(57) **Abstract**

In methods for recovering heat from an effluent vapor stream of a dehydrogenation reactor system producing styrene, heat may be supplied from the dehydrogenation reactor effluent vapor stream to a water stream to produce a steam stream and a cooler effluent vapor stream. The cooler effluent vapor stream may be partially condensed to produce a three-phase stream that may be separated into a vapor stream, a liquid hydrocarbons stream, and an aqueous stream. Then, the residual hydrocarbons in the aqueous stream may be stripped therefrom using the steam of the steam stream as a stripping agent.

## Description

### Technical Field

The present disclosure relates generally to chemical processing and, more particularly (although not necessarily exclusively), to recovering additional heat from a dehydrogenation reactor effluent vapor stream during the production of styrene.

### Background

The majority of styrene monomer produced commercially is prepared by the dehydrogenation of ethylbenzene in one or more vapor-phase, fixed-catalyst-bed reactors. Each pass through a train of reactors in series typically converts about 60% to 75% of the ethylbenzene feed to styrene. The effluent vapor stream from the final reactor is a mixture of a number of hydrocarbons, steam, and hydrogen typically under vacuum at a temperature ranging from 540°C to 610°C. Heat is recovered from the reactor effluent in a series of heat recovery exchangers. The recovered heat is typically used to heat the ethylbenzene feed to the reactors and/or produce steam at one or more pressures for use as a heating medium in the styrene process and/or other processes. Because oxygen in steam causes rapid corrosion in carbon steel by rusting, steam systems for transmitting heat in plants (also referred to as utility steam) are normally kept above atmospheric pressure so as to avoid oxygen getting in through air leaks. Consequently, the process temperature in the effluent heat recovery heat exchangers needs to be above 100°C to produce the above-atmospheric pressure utility steam from the heat of the reactor effluent vapor stream. Even if oxygen is acceptable, the steam generated under partial vacuum would need to be compressed to get into a utility steam system. Heat can also be recovered by boiling the ethylbenzene feed to the reactors with or without water; however, this boiling is down at very low vacuum pressures and needs a compressor with a high compression ratio, and thus a high-power requirement, to get the ethylbenzene into the reactors. Therefore, heat is typically recovered from the reactor effluent vapor stream only down to a stream temperature in the range of 110°C to 160°C, and the remaining superheat of the reactor effluent is discharged to cooling water or to the air. Consequentially, there is room for improvement.

### Summary

One or more embodiments of the present disclosure include a method comprising: supplying heat from a dehydrogenation reactor effluent vapor stream at 160°C or less to a water stream to at least partially vaporize the water stream and produce a steam stream and a cooler effluent vapor stream, wherein the dehydrogenation reactor effluent vapor stream comprises styrene; condensing the cooler effluent vapor stream to produce a three-phase effluent stream that includes a hydrocarbon liquid phase, an aqueous phase, and a vapor phase; separating the three phases of the three-phase effluent stream to produce a vapor stream, a liquid hydrocarbons stream, and an aqueous stream; and stripping residual hydrocarbons from the aqueous stream using steam in the steam stream as a stripping agent.

One or more embodiments include the method of any previous paragraph, wherein the stripping of the residual hydrocarbons produces an overhead stream comprising at least a portion of the residual hydrocarbons and a bottoms stream comprising water; wherein the separating of the three phases occurs in a reactor effluent separator; and wherein the method further comprises: (i) recycling at least a portion of the overhead stream, directly or indirectly, to the reactor effluent separator, (ii) recycling at least a portion of the bottoms stream to the water stream, or (iii) both (i) and (ii). In some instances, (i) occurs, the overhead stream is a first overhead stream, and the bottoms stream is a first bottoms stream; and the method further comprises: at least partially condensing the first overhead stream; separating the at least partially condensed first overhead stream into a second overhead stream and a second bottoms stream; recycling the second overhead stream to the cooler effluent vapor stream; and recycling the second bottoms stream to the reactor effluent separator.

One or more embodiments include the method of any previous paragraph, wherein the method further comprises: preheating the aqueous stream before the stripping.

One or more embodiments include the method of any previous paragraph, wherein a pressure of the steam stream entering the stripper is between 5 psia to 15 psia.

One or more embodiments include the method of any previous paragraph, wherein a pressure of the steam stream entering the stripper is between 5 psia to 10 psia.

One or more embodiments include the method of any previous paragraph, wherein a pressure at a bottom of a stripper in which the stripping occurs is 6 psia to 9 psia.

One or more embodiments include the method of any previous paragraph, wherein the method further comprises: supplying utility steam to the stripper.

One or more embodiments of the present disclosure include a system comprising: a first heat exchanger configured to (i) receive and cool a dehydrogenation reactor effluent vapor stream into a cooler effluent vapor stream and (ii) receive and heat a water stream into a steam stream; at least one second heat exchanger configured to receive and at least partially condense the effluent vapor stream into a three-phase effluent stream; a reactor effluent separator configured to receive the three-phase stream and produce an aqueous stream, a liquid hydrocarbons stream, and a vapor stream; and a stripper configured to (i) receive the aqueous stream and the steam stream and (ii) strip residual hydrocarbons from the aqueous stream to produce an overhead stream and a bottoms stream.

One or more embodiments include the system of any previous paragraph, wherein the system is configured to (i) recycle at least a portion of the overhead stream to the reactor effluent separator, (ii) recycle at least a portion of the bottoms stream to the water stream, or (iii) both (i) and (ii).

One or more embodiments include the system of any previous paragraph, wherein the first heat exchanger is a vacuum steam generator.

One or more embodiments include the system of any previous paragraph, wherein the stripper system is configured to receive a utility steam stream.

One or more embodiments include the system of any previous paragraph, wherein the system further comprises: a third heat exchanger between the reactor effluent separator and the stripper configured to preheat the aqueous stream.

One or more embodiments of the present disclosure include a method comprising: supplying heat from a dehydrogenation reactor effluent vapor stream at 160°C or less to a water stream to produce a heated liquid water stream and a cooler effluent vapor stream, wherein the dehydrogenation reactor effluent vapor stream comprises styrene; condensing the cooler effluent vapor stream to produce a three-phase effluent stream that includes a vapor phase, a hydrocarbon liquid phase, and an aqueous phase; separating the three phases of the three-phase effluent stream to produce a vapor stream, a liquid hydrocarbons stream, and an aqueous stream; reducing a pressure of the heated water stream to produce steam; and stripping residual hydrocarbons from the aqueous stream using the steam, generated by reducing the pressure of the heated water stream, as a stripping agent.

One or more embodiments of the present disclosure include a system comprising: a first heat exchanger configured to (i) receive and cool a dehydrogenation reactor effluent vapor stream into a cooler effluent vapor stream and (ii) receive and heat a water stream into a heated liquid water stream; at least one second heat exchanger configured to receive and at least partially condense the effluent vapor stream into a three-phase effluent stream; a reactor effluent separator configured to receive the three-phase stream and produce an aqueous stream, a liquid hydrocarbons stream, and a vapor stream; a pressure valve along the heated water stream configured to reduce the pressure of the heated water and produce steam; and a stripper configured to (i) receive the aqueous stream and the steam from the heated water stream and (ii) strip residual hydrocarbons from the aqueous stream to produce an overhead stream and a bottoms stream.

### Brief Description of the Drawings

FIG. 1 illustrates a process flow diagram of a portion of an example styrene production system where additional heat is recovered from a dehydrogenation reactor effluent vapor stream according to at least some examples of the present disclosure.
FIG. 2 illustrates a process flow diagram of a portion of another example styrene production system where additional heat is recovered from a dehydrogenation reactor effluent vapor stream according to at least some examples of the present disclosure.
FIG. 3 illustrates a flow chart of a method for recovering heat from the dehydrogenation reactor effluent vapor stream according to at least some examples of the present disclosure.

### Detailed Description

Certain aspects and features of the present disclosure relate to recovering additional heat from a dehydrogenation reactor effluent in a styrene plant. Typically, the dehydrogenation reactor effluent vapor stream from the last reactor may be 540°C to 610°C. Conventional systems include one or more (typically two or three) heat exchangers to cool the dehydrogenation reactor effluent vapor stream to the range of 110°C to 160°C, often down to about 120°C. Further heat recovery below about 120°C may be achieved with boiling water at atmospheric or below-atmospheric pressures. However, to use the resultant steam as utility steam is normally not allowed because of the possible presence of oxygen from air leakage, and the steam at atmospheric or below-atmospheric pressures would typically need to be pressurized to get into a utility steam system. Accordingly, such heat recovery schemes may require expensive compressors. Consequently, these heat recovery approaches may have a large consumption of power to drive the compressor and significant investment costs.

In contrast, the present disclosure includes an additional heat recovery exchanger that recovers superheat (heat of vapor above the condensation temperature) to supply heat to a downstream, stripping process operation. The steam, which may be under a partial vacuum, may be useful as a stripping agent to extract hydrocarbons from the aqueous phase of the condensed portion of the reactor effluent downstream of the heat recovery exchangers. Using a partial-vacuum stripping process as the destination for steam generated in this new exchanger eliminates the need for a compressor while extracting additional heat from the dehydrogenation reactor effluent vapor stream at 160°C or less (i.e., after the conventional heat recovery exchangers).

Further, because the stripping process is typically performed under partial vacuum, air infiltration may, and likely will, occur. Because the steam used for stripping is not used as plant utility steam, air leakage in the upstream heat recovery process may have minimal effects. Consequently, using this low-pressure steam in the stripping process may provide an economical approach, e.g., no compressor needed, to heat recovery while avoiding contamination of the utility steam system with oxygen.

The illustrative examples herein are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

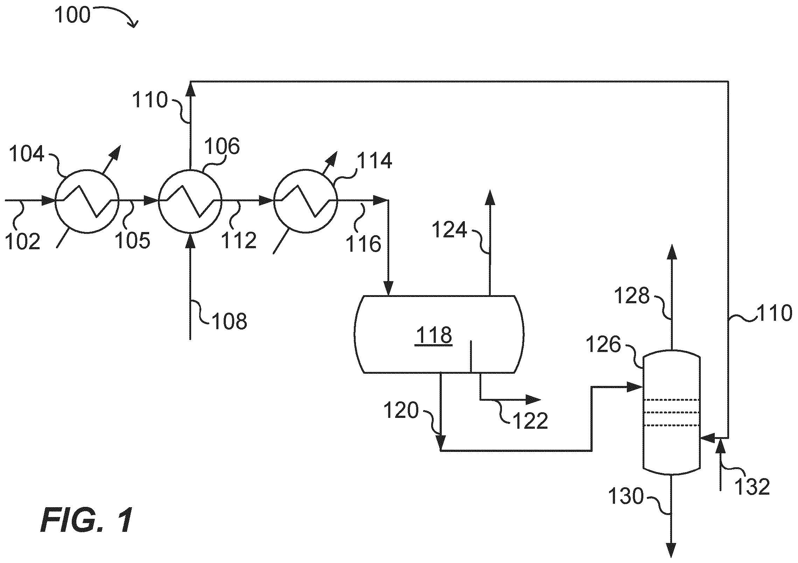

FIG. 1 illustrates a process flow diagram of an example system 100 for recovering additional heat from a dehydrogenation reactor effluent vapor stream 105 according to at least some examples of the present disclosure. The illustration provides a flow diagram where other equipment may be incorporated for proper operation of the system 100. For example, additional, more minor equipment like sensors, valves, pumps, and the like may be included within the system but are omitted from the figures for simplicity. Additionally, other flow streams may be included depending on the configuration of the system and its integration with other equipment and/or portions of other systems.

The system 100 receives the dehydrogenation reactor effluent vapor stream 102 from an upstream dehydrogenation reaction system (not illustrated). In the upstream dehydrogenation reaction system, ethylbenzene may be dehydrogenated to form styrene as the main product with hydrogen being a main byproduct. The dehydrogenation reactor effluent vapor stream may include styrene, unreacted ethylbenzene, and styrene process byproducts like hydrogen, benzene, and toluene.

In the systems and methods of the present disclosure, the dehydrogenation reactor effluent vapor stream 102 has been cooled by one or more heat exchangers 104 to reduce the temperature of the dehydrogenation reactor effluent vapor stream 102 to 160°C or less at dehydrogenation reactor effluent vapor stream 105. The dehydrogenation reactor effluent vapor stream 105 may then be used as a heat source in a heat exchanger 106 to at least partially vaporize the water of a water stream 108 to steam. The resultant steam in stream 110, optionally augmented with steam stream 132, may be used for stripping hydrocarbons including styrene and ethylbenzene in a downstream process. Therefore, in general, the systems and methods of the present disclosure recover additional heat from the dehydrogenation reactor effluent in a styrene process and use said heat for purifying water and recovering hydrocarbons including styrene.

More specifically, the heat exchanger 106 may be configured to supply heat from the dehydrogenation reactor effluent vapor stream 105 to a water stream 108 to generate steam. The resulting streams include a cooler effluent vapor stream 112 and the steam stream 110.

The water stream 108 may be any suitable water stream including boiler feed water, a water stream from within the system 100 (e.g., bottoms water from stripper 126 as discussed below), the like, or any combination thereof. The water stream 108 and, consequently, the steam stream 110 is predominantly water (e.g., 99.9 wt% or greater, 99.99 wt% or greater, or 99.999 wt% or greater) and may include impurities (e.g., 0.1 wt% or less, 0.01 wt% or less, or 0.001 wt% or less).

The temperature of the water stream 108 may be any value as long as the stream is at least partially liquid.

Any suitable heat exchanger may be used as the heat exchanger 106 to supply heat to at least partially vaporize the water stream 108. Advantageously, the heat exchanger 106 may be a vacuum steam generator that generates the steam under partial vacuum. Examples of vacuum steam generators may include, but are not limited to, falling-film-type heat exchangers that may be shell-and-tube heat exchangers, a kettle-type heat exchanger, and the like. The vacuum steam generators may be configured for boiling water on the shell side or the tube side of a shell-and-tube, falling-film exchanger. With a falling-film-type, a pump (not illustrated) may be used to recirculate the water through the heat exchanger 106.

The steam stream 110 may be composed of steam or a combination of liquid water and steam. The temperature of the steam stream 110 may range from 70°C to 110°C (e.g., 70°C to 100°C, 70°C to 90°C, or 70°C to 85°C). Since stream 110 is very pure water as noted above, the pressure of the steam stream 110 is essentially the vapor pressure of water at the temperature of the stream.

The temperature of the dehydrogenation reactor effluent vapor stream 105 may range from 110°C to 160°C (e.g., 110°C to 140°C, 115°C to 135°C, or 115°C to 130°C).

The cooler effluent vapor stream 112 may be at least 5°C cooler (e.g., 5°C to 75°C, 15°C to 60°C, or 15°C to 40°C) than the dehydrogenation reactor effluent vapor stream 105. The temperature of the cooler effluent vapor stream 112 may range from 80°C to 120°C (e.g., 80°C to 110°C, 80°C to 100°C, or 85°C to 100°C).

The cooler effluent vapor stream 112 may then be further cooled in one or more heat exchangers 114 to below the dew point of the effluent vapor stream, which may cause at least a portion of the water and hydrocarbons in the effluent vapor stream to condense and produce a three-phase effluent stream 116. The three-phase effluent stream 116 includes an aqueous phase, a hydrocarbon liquid phase, and a vapor phase. The aqueous phase may comprise water and residual hydrocarbons (e.g., dissolved hydrocarbons and/or entrained droplets of liquid hydrocarbons). The hydrocarbon liquid phase may comprise styrene, ethylbenzene and byproduct hydrocarbons from the dehydrogenation reaction (e.g., benzene and toluene). The vapor phase may comprise water vapor, hydrogen, and other reaction byproducts.

The three-phase effluent stream 116 may be separated into the three respective phases. In the illustrated example system 100, a reactor effluent separator 118 (e.g., a drum where the three phases are separated by gravity) may be used for such a separation where the outputs of the reactor effluent separator 118 include an aqueous stream 120, a liquid hydrocarbons stream 122, and a vapor stream 124.

The pressure of the effluent stream from the dehydrogenation reactor effluent stream 105 may range from 3 pounds per square inch absolute (psia) to 10 psia (e.g., 3 psia to 8 psia, 3 psia to 6 psia, or 4 psia to 6 psia).

The vapor stream 124 may be compressed and used as fuel. Alternatively, at least a portion of the hydrogen in the vapor stream 124 after pressurization may be separated and used in other processes.

The liquid hydrocarbons stream 122 may be further processed, for example in a distillation train (not illustrated), to produce a purified styrene monomer product.

The aqueous stream 120 may comprise at least 99 wt% (e.g., at least 99.5 wt%, or at least 99.9 wt%) water and up to 1 wt% (e.g., up to 0.5 wt%, or up to 0.1 wt%) residual hydrocarbons. The aqueous stream 120, optionally preheated before the stripper 126, may be further processed to remove at least a portion of the residual hydrocarbons therefrom. The residual hydrocarbons may include, but are not limited to, styrene, ethylbenzene, benzene, toluene, the like, and any combination thereof.

Removal of the residual hydrocarbons from the aqueous stream 120 may be achieved using the steam in stream 110 as the stripping agent in the stripper 126. The pressure of the steam stream 110 may range from 5 psia to 15 psia (e.g., 5 psia to 12 psia, 5 psia to 10 psia, or 6 psia to 9 psia).

The bottom of the stripper 126 may operate at a pressure ranging from 4 psia to 15 psia (e.g., 5 psia to 12 psia, 6 psia to 10 psia, or 6 psia to 9 psia).

The product streams from the stripper 126 may include an overhead stream 128 and a bottoms stream 130.

The overhead stream 128 may be directly or indirectly recycled back to the reactor effluent separator 118 for the recovery of water and hydrocarbons therein. For example, the overhead stream 128 may be at least partially condensed (e.g., in a heat exchanger) before the resultant condensate is introduced to the reactor effluent separator 118.

The bottoms stream 130 may comprise at least 99.9 wt% (e.g., at least 99.99 wt%, or at least 99.999 wt%) water. The bottoms stream 130 may be used to generate steam in fired steam generating boilers and other steam generators.

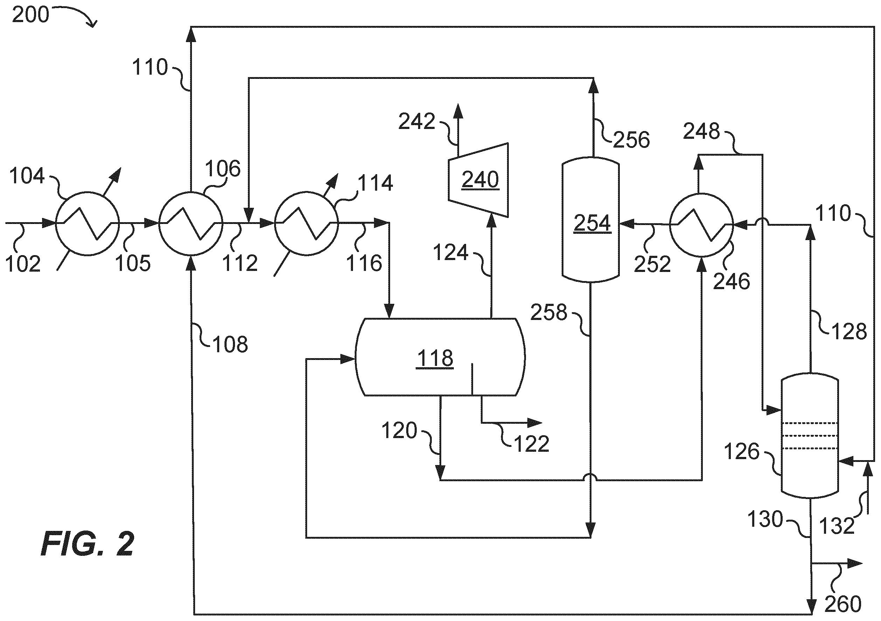

FIG. 2 illustrates a process flow diagram of a portion of a system 200 for recovering additional heat from a dehydrogenation reactor effluent vapor stream 105 according to at least some examples of the present disclosure. FIG. 2 is a nonlimiting example embodiment of the system 100 of FIG. 1. Where the same reference numbers from FIG. 1 are used in FIG. 2, it is understood that the description of FIG. 1, including concentrations, flows, operating conditions, and the like, apply to the example system 200 of FIG. 2. Further, as with FIG. 1, additional equipment and flow streams may be included in FIG. 2 for proper operation of the system 200.

In the illustrated example, the vapor stream 124 may be compressed (e.g., in compressor 240) to produce a compressed vapor stream 242, which, after condensing out at least some of the water and aromatic hydrocarbons, may be used as a fuel. Optionally, at least a portion of the hydrogen in the compressed vapor stream 242 may be separated therefrom for use in other processes.

Further, the aqueous stream 120 may be preheated in a heat exchanger 246 to produce heated aqueous stream 248 before introduction to a stripper 126. Other preheating configurations may be implemented.

The steam stream 110, optionally augmented with steam stream 132 (e.g., utility steam), may be used as the stripping agent in the stripper 126. In the stripper 126, at least a portion of the residual hydrocarbons are stripped from the heated aqueous stream 248 to produce the overhead stream 128. The water from the bottom of the stripper 126 may produce bottoms stream 130.

In some instances, the bottoms stream 130 may have more water than needed for supplying the water stream 108. Accordingly, at least a portion of the bottoms stream 130 from the stripper 126 may be separated therefrom via stream 260.

The overhead stream 128 from the stripper 126 may be further processed before recycling back to the reactor effluent separator 118. As discussed above, the overhead stream 128 should be at least partially condensed. In the illustrated example, the overhead stream 128 may be used in the heat exchanger 246 to supply heat to the aqueous stream 120, which may at least partially condense the overhead stream 128. Alternatively, a heat exchanger other than heat exchanger 246 may be used to at least partially condense the overhead stream 128. Other alternative configurations and recycle flows may be implemented.

The resultant partially-condensed stream 252 may be supplied to a separation drum 254 to produce (i) an overhead stream 256 containing the lighter hydrocarbons of the residual hydrocarbons recovered in the stripper 126 plus steam and (ii) a bottoms stream 258 containing heavier hydrocarbons of the residual hydrocarbons recovered in the stripper 126 plus water. The overhead stream 256 may be recycled back to the cooler effluent vapor stream 112, and the bottoms stream 258 may be recycled back to the reactor effluent separator 118. One skilled in the art will recognize that each of the overhead stream 256 and the bottoms stream 258 may be recycled via other flow paths back to the reactor effluent separator 118, directly or indirectly.

The foregoing descriptions of FIGS. 1 and 2 include steam production at the heat exchanger 106. Alternatively, stream 110 may be liquid water having been heated in heat exchanger 106 at a pressure high enough to prevent vaporization, which can be determined from the highest possible temperature of stream 105 and the vapor pressure of water at that temperature. Then, a pressure valve between exchanger 106 and the inlet of the stripper 126 may convert the heated, liquid water in stream 110 partially to steam that is used as a stripping agent for the aqueous stream 120. In this case, the temperature of the liquid water stream 110 before the valve in normal operation may range from 80°C to 150°C (e.g., 90°C to 115°C, 95°C to 110°C, or 100°C to 110°C). The stripper may still be operated at the pressure described above. Further, in this example, the source of the water stream 108 may be the same as described above. The remaining disclosures relative to FIGS. 1 and 2 apply to these alternative embodiments with liquid water stream 110.

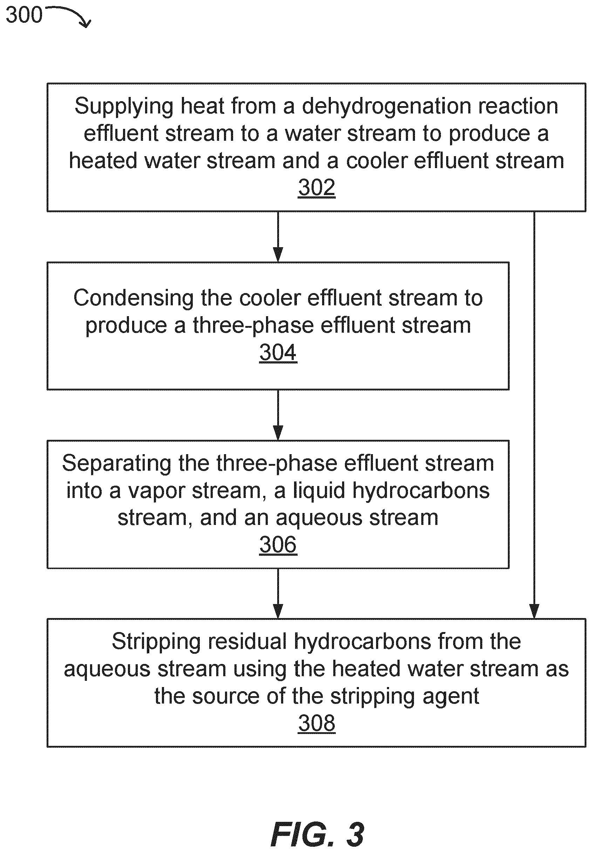

FIG. 3 illustrates a flow chart of a method 300 for recovering heat from the dehydrogenation reactor effluent vapor stream according to at least some examples of the present disclosure. The operating conditions, stream compositions, and the like described relative to FIGS. 1 and 2 apply to the methods of the present disclosure including the example method of FIG. 3.

Step 302 may include supplying heat from a dehydrogenation reactor effluent vapor stream to a water stream to produce a heated water stream (e.g., the steam or steam-liquid stream 110 of FIGS. 1 and 2 or the liquid water steam 110 of the alternate embodiments of FIGS. 1 and 2) and a cooler effluent vapor stream. As discussed herein, the dehydrogenation reactor effluent vapor stream may have already been reduced to 160°C or less before supplying such heat.

Step 304 may include partially condensing the cooler effluent vapor stream to produce a three-phase effluent stream.

Step 306 may include separating the three-phase effluent stream into a vapor stream, a liquid hydrocarbons stream, and an aqueous stream. Each of said streams may be further processed including using methods described herein.

Step 308 may include stripping residual hydrocarbons from the aqueous stream using the heated water stream as the source of steam to be used as a stripping agent.

Step 308 may produce an overhead stream composed primarily of steam with some hydrocarbons and a bottoms stream composed primarily of liquid water. At least a portion of the overhead stream may be recycled back into the system to recover said hydrocarbons and water.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples.

## Claims

1. A method comprising:
supplying heat from a dehydrogenation reactor effluent vapor stream at 160°C or less to a water stream to at least partially vaporize the water stream and produce a steam stream and a cooler effluent vapor stream, wherein the dehydrogenation reactor effluent vapor stream comprises styrene;
condensing the cooler effluent vapor stream to produce a three-phase effluent stream that includes a hydrocarbon liquid phase, an aqueous phase, and a vapor phase;
separating the three phases of the three-phase effluent stream to produce a vapor stream, a liquid hydrocarbons stream, and an aqueous stream; and
stripping residual hydrocarbons from the aqueous stream using steam in the steam stream as a stripping agent.

2. The method of claim 1, wherein the stripping of the residual hydrocarbons produces an overhead stream comprising at least a portion of the residual hydrocarbons and a bottoms stream comprising water; wherein the separating of the three phases occurs in a reactor effluent separator; and wherein the method further comprises:
(i) recycling at least a portion of the overhead stream, directly or indirectly, to the reactor effluent separator,
(ii) recycling at least a portion of the bottoms stream to the water stream, or
(iii) both (i) and (ii).

3. The method of claim 2, wherein (i) occurs, the overhead stream is a first overhead stream, and the bottoms stream is a first bottoms stream; and wherein the method further comprises:
at least partially condensing the first overhead stream;
separating the at least partially condensed first overhead stream into a second overhead stream and a second bottoms stream;
recycling the second overhead stream to the cooler effluent vapor stream; and
recycling the second bottoms stream to the reactor effluent separator.

4. The method of any preceding claim further comprising:
preheating the aqueous stream before the stripping.

5. The method of any preceding claim, wherein a pressure of the steam stream entering the stripper is between 5 psia to 15 psia.

6. The method of any preceding claim, wherein a pressure of the steam stream entering the stripper is between 5 psia to 10 psia.

7. The method of any preceding claim, wherein a pressure at a bottom of a stripper in which the stripping occurs is 6 psia to 9 psia.

8. The method of any preceding claim further comprising:
supplying utility steam to the stripper.

9. A system comprising:
a first heat exchanger configured to (i) receive and cool a dehydrogenation reactor effluent vapor stream into a cooler effluent vapor stream and (ii) receive and heat a water stream into a steam stream;
at least one second heat exchanger configured to receive and at least partially condense the effluent vapor stream into a three-phase effluent stream;
a reactor effluent separator configured to receive the three-phase stream and produce an aqueous stream, a liquid hydrocarbons stream, and a vapor stream; and
a stripper configured to (i) receive the aqueous stream and the steam stream and (ii) strip residual hydrocarbons from the aqueous stream to produce an overhead stream and a bottoms stream.

10. The system of claim 9, wherein the system is configured to (i) recycle at least a portion of the overhead stream to the reactor effluent separator, (ii) recycle at least a portion of the bottoms stream to the water stream, or (iii) both (i) and (ii).

11. The system of any one of claims 9-10, wherein the first heat exchanger is a vacuum steam generator.

12. The system of any one of claims 9-11, wherein the stripper system is configured to receive a utility steam stream.

13. The system of any one of claims 9-12 further comprising:
a third heat exchanger between the reactor effluent separator and
the stripper configured to preheat the aqueous stream.

14. A method comprising:
supplying heat from a dehydrogenation reactor effluent vapor stream at 160°C or less to a water stream to produce a heated liquid water stream and a cooler effluent vapor stream, wherein the dehydrogenation reactor effluent vapor stream comprises styrene;
condensing the cooler effluent vapor stream to produce a three-phase effluent stream that includes a vapor phase, a hydrocarbon liquid phase, and an aqueous phase;
separating the three phases of the three-phase effluent stream to produce a vapor stream, a liquid hydrocarbons stream, and an aqueous stream;
reducing a pressure of the heated water stream to produce steam; and
stripping residual hydrocarbons from the aqueous stream using the steam, generated by reducing the pressure of the heated water stream, as a stripping agent.

15. A system comprising:
a first heat exchanger configured to (i) receive and cool a dehydrogenation reactor effluent vapor stream into a cooler effluent vapor stream and (ii) receive and heat a water stream into a heated liquid water stream;
at least one second heat exchanger configured to receive and at least partially condense the effluent vapor stream into a three-phase effluent stream;
a reactor effluent separator configured to receive the three-phase stream and produce an aqueous stream, a liquid hydrocarbons stream, and a vapor stream;
a pressure valve along the heated water stream configured to reduce the pressure of the heated water and produce steam; and
a stripper configured to (i) receive the aqueous stream and the steam from the heated water stream and (ii) strip residual hydrocarbons from the aqueous stream to produce an overhead stream and a bottoms stream.

## Amended claims

### Amended claims in accordance with Rule 137(2) EPC.

1. A method comprising:
supplying heat from a dehydrogenation reactor effluent vapor stream at 160°C or less to a water stream to at least partially vaporize the water stream and produce a steam stream and a cooler effluent vapor stream, wherein the dehydrogenation reactor effluent vapor stream comprises styrene and wherein the temperature of the cooler effluent vapor stream is in the range from 80°C to 120°C;
condensing the cooler effluent vapor stream to produce a three-phase effluent stream that includes a hydrocarbon liquid phase, an aqueous phase, and a vapor phase;
separating the three phases of the three-phase effluent stream to produce a vapor stream, a liquid hydrocarbons stream, and an aqueous stream; and
stripping residual hydrocarbons from the aqueous stream using steam in the steam stream as a stripping agent.

2. The method of claim 1, wherein the stripping of the residual hydrocarbons produces an overhead stream comprising at least a portion of the residual hydrocarbons and a bottoms stream comprising water; wherein the separating of the three phases occurs in a reactor effluent separator; and wherein the method further comprises:
(i) recycling at least a portion of the overhead stream, directly or indirectly, to the reactor effluent separator,
(ii) recycling at least a portion of the bottoms stream to the water stream, or
(iii) both (i) and (ii).

3. The method of claim 2, wherein (i) occurs, the overhead stream is a first overhead stream, and the bottoms stream is a first bottoms stream; and wherein the method further comprises:
at least partially condensing the first overhead stream;
separating the at least partially condensed first overhead stream into a second overhead stream and a second bottoms stream;
recycling the second overhead stream to the cooler effluent vapor stream; and
recycling the second bottoms stream to the reactor effluent separator.

4. The method of any preceding claim further comprising:
preheating the aqueous stream before the stripping.

5. The method of any preceding claim, wherein a pressure of the steam stream entering the stripper is between 5 psia to 15 psia.

6. The method of any preceding claim, wherein a pressure of the steam stream entering the stripper is between 5 psia to 10 psia.

7. The method of any preceding claim, wherein a pressure at a bottom of a stripper in which the stripping occurs is 6 psia to 9 psia.

8. The method of any preceding claim further comprising:
supplying utility steam to the stripper.

9. A system comprising:
a first heat exchanger configured to (i) receive and cool a dehydrogenation reactor effluent vapor stream into a cooler effluent vapor stream, wherein the temperature of the cooler effluent vapor stream is in the range from 80°C to 120°C, and (ii) receive and heat a water stream into a steam stream;
at least one second heat exchanger configured to receive and at least partially condense the effluent vapor stream into a three-phase effluent stream;
a reactor effluent separator configured to receive the three-phase stream and produce an aqueous stream, a liquid hydrocarbons stream, and a vapor stream; and
a stripper configured to (i) receive the aqueous stream and the steam stream and (ii) strip residual hydrocarbons from the aqueous stream to produce an overhead stream and a bottoms stream.

10. The system of claim 9, wherein the system is configured to (i) recycle at least a portion of the overhead stream to the reactor effluent separator, (ii) recycle at least a portion of the bottoms stream to the water stream, or (iii) both (i) and (ii).

11. The system of any one of claims 9-10, wherein the first heat exchanger is a vacuum steam generator.

12. The system of any one of claims 9-11, wherein the stripper system is configured to receive a utility steam stream.

13. The system of any one of claims 9-12 further comprising:
a third heat exchanger between the reactor effluent separator and
the stripper configured to preheat the aqueous stream.

14. A method comprising:
supplying heat from a dehydrogenation reactor effluent vapor stream at 160°C or less to a water stream to produce a heated liquid water stream and a cooler effluent vapor stream, wherein the dehydrogenation reactor effluent vapor stream comprises styrene and wherein the temperature of the cooler effluent vapor stream is in the range from 80°C to 120°C;
condensing the cooler effluent vapor stream to produce a three-phase effluent stream that includes a vapor phase, a hydrocarbon liquid phase, and an aqueous phase;
separating the three phases of the three-phase effluent stream to produce a vapor stream, a liquid hydrocarbons stream, and an aqueous stream;
reducing a pressure of the heated water stream to produce steam; and
stripping residual hydrocarbons from the aqueous stream using the steam, generated by reducing the pressure of the heated water stream, as a stripping agent.

15. A system comprising:
a first heat exchanger configured to (i) receive and cool a dehydrogenation reactor effluent vapor stream into a cooler effluent vapor stream, wherein the temperature of the cooler effluent vapor stream is in the range from 80°C to 120°C, and (ii) receive and heat a water stream into a heated liquid water stream;
at least one second heat exchanger configured to receive and at least partially condense the effluent vapor stream into a three-phase effluent stream;
a reactor effluent separator configured to receive the three-phase stream and produce an aqueous stream, a liquid hydrocarbons stream, and a vapor stream;
a pressure valve along the heated water stream configured to reduce the pressure of the heated water and produce steam; and
a stripper configured to (i) receive the aqueous stream and the steam from the heated water stream and (ii) strip residual hydrocarbons from the aqueous stream to produce an overhead stream and a bottoms stream.
